# DEMANDE DE BREVET EUROPEEN

(11) **EP 1 127 790 A1**
(43) Date de publication de la demande: **29.08.2001**
(21) Numéro de dépôt: 01400411.3
(22) Date de dépôt: 16.02.2001
(51) Int. Cl.: B65B 25/06, B65G 15/40

(54) **Machine de mise en boîte de matière molle comportant une courroie de conformation de la matière molle**

(30) Priorité: 22.02.2000 FR 0002157
(71) Demandeur: Tremark Technologies Inc., Mont Saint Hilaire, Quebec J3H 5M8 (CA)
(72) Inventeur: Marchadour, Jean-Charles, 29120 Pont l'Abbe (FR); Louboutin, Thierry, 29510 Landrevarzec (FR)
(74) Mandataire: Jaunez, Xavier

(57) **Abrégé**

L'invention concerne une machine de mise en boîte de matière molle, comprenant un convoyeur de conformation de la matière molle en un boudin, un organe support (4) servant à amener successivement des boîtes à remplir dans le prolongement du convoyeur, et un organe de coupe (5) du boudin associé à l'organe support, le convoyeur de conformation (3) comprenant une courroie (6) unique formant une boucle fermée passant autour de deux poulies d'extrémité (7, 8) d'axes parallèles, la courroie comportant deux ailes longitudinales (9) en regard et à distance l'une de l'autre et une semelle (10) ayant deux bords longitudinaux auxquels les ailes sont reliées par des parties de liaison (11) qui sont déformables entre un premier état dans lequel la courroie est ouverte supérieurement et un deuxième état dans lequel la courroie est refermée sur elle-même, la machine comportant en outre des glissières latérales (17) s'étendant parallèlement à la courroie pour coopérer avec les ailes de manière à déformer les parties de liaison de ladite courroie entre leur premier et deuxième états.

## Description

La présente invention concerne machine de mise en boîte de matière molle utilisable notamment pour la mise en boîte de conserve de chair animale, comme le poisson cru et plus particulièrement le thon.

Une machine de mise en boîte de chair comprend généralement un convoyeur de conformation de la chair en un boudin, un barillet servant à amener successivement des boîtes à remplir dans le prolongement du convoyeur de conformation, et un organe de coupe du boudin de chair associé au barillet pour former des tronçons de longueur correspondant à la profondeur des boîtes.

La principale difficulté rencontrée dans de telles machines est liée à la consistance de la chair qui rend la mise en boîte difficile. Ainsi, dans le cas du thon, la chair a tendance à se désagréger lors de la mise en boîte, ce qui provoque la formation de nombreux déchets entraînant un surcoût répercuté sur le prix de vente. En outre, l'aspect du thon dans la boîte s'apparente alors à un amalgame hétérogène de morceaux découpés puis tassés qui est peu attrayant pour le consommateur.

Pour pallier ces inconvénients, diverses solutions ont été envisagées pour conformer le thon et en faire un ensemble relativement homogène une fois en boîte.

Une première solution est décrite dans les documents US-A-2 648 478 et US-A-2 812 785. Dans ces documents, le convoyeur de conformation est formé d'une chaîne de pinces à mâchoires recourbées dont le rapprochement assure la conformation du thon en un tronçon cylindrique. Le convoyeur de conformation ainsi réalisé a une structure complexe limitant sa fiabilité et n'assure qu'un traitement du thon par portions conduisant à une productivité faible.

Le document US-A-2 840 121 décrit une deuxième solution dans laquelle le convoyeur de conformation est formé de quatre courroies plates légèrement convergentes délimitant une voie d'amenée de section sensiblement carrée. Le convoyeur de conformation ainsi réalisé assure un traitement en continu du thon. Cependant, ce convoyeur de conformation a une structure complexe. En outre, la plupart des boîtes utilisées pour le conditionnement du thon ont une section transversale circulaire, de sorte qu'il est nécessaire de prévoir, à la sortie du convoyeur de conformation, un organe conférant au boudin formé par ledit convoyeur de conformation une section transversale circulaire. Cet organe assure un traitement du thon par tronçons limitant la cadence effective du convoyeur de conformation en-deçà de sa cadence potentielle maximale.

Il est décrit dans les documents US-A-2 542 673, US-A-2 601 093 et US-A-2 669 378 une troisième solution consistant à prévoir un convoyeur de conformation constitué de deux boucles sans fin disposées dans un même plan horizontal, et constitué par deux chaînes dont les brins ont une section transversale semi-circulaire. Les chaînes ont deux brins convergents s'étendant en regard et de façon espacée l'un de l'autre pour définir une voie ouverte d'amenée du thon vers le barillet supportant les boîtes. Un tel convoyeur de conformation présente l'inconvénient d'avoir une structure complexe occasionnant des difficultés de maintenance et de nettoyage. De la matière à traiter risque en effet de pénétrer entre les maillons, de sorte qu'il est nécessaire d'arrêter régulièrement la chaîne de production pour procéder à un nettoyage du convoyeur de conformation qui peut s'avérer relativement long du fait de la faible accessibilité des endroits à nettoyer.

On connaît également du document FR-A-2 623 775 un convoyeur de conformation formé d'une chaîne sans fin inférieure et d'une chaîne sans fin supérieure s'étendant dans un plan vertical commun et ayant des brins présentant en section transversale une découpe semi-circulaire. Les chaînes inférieure et supérieure sont agencées l'une par rapport à l'autre de telle manière que le brin inférieur de la chaîne supérieure s'étende en regard du brin supérieur de la chaîne inférieure et converge vers celui-ci en direction de la sortie du convoyeur de conformation, pour définir à l'entrée du convoyeur de conformation une voie d'amenée ouverte se fermant progressivement pour devenir une voie d'amenée circulaire fermée à la sortie du convoyeur de conformation. Les inconvénients rencontrés avec ce type de convoyeur de conformation sont du même ordre que ceux mentionnés précédemment.

Une autre solution est décrite dans le document FR-A-2 735 446. Le convoyeur de conformation décrit dans ce document comprend deux courroies continues et lisses ayant une section semi-circulaire. Les courroies sont disposées selon deux boucles s'étendant dans des plans obliques formant un angle l'un par rapport à l'autre, de sorte que les courroies ont deux brins adjacents qui forment à l'entrée du convoyeur une voie d'amenée de section évasée évoluant progressivement vers la sortie en une voie d'amenée de section circulaire resserrée, les arêtes inférieures des brins adjacents étant amenées en contact par l'intermédiaire d'une goulotte de liaison dans laquelle elles coulissent librement. Dans un tel convoyeur de conformation, l'étanchéité de la voie d'amenée de la chair est assurée par l'application des arêtes inférieures des brins adjacents l'une contre l'autre. Toutefois, ce contact n'est pas suffisant et des fuites risquent de se produire entre les courroies, ce qui est particulièrement indésirable dans le cas de matières molles chargées de liquide, comme le poisson cru, notamment le thon cru. La goulotte de liaison peut permettre de canaliser ces fuites, mais ce convoyeur a une structure complexe qui rend difficile le réglage des positions relatives des deux bandes et le nettoyage de celles-ci, ainsi que, d'une manière générale, les opérations de maintenance.

D'autres solutions de transport par courroie sont connues dans des domaines plus éloignés.

Les documents US-A-2 365 762 et US-A-2 839 181 décrivent ainsi une courroie comprenant des ailes déformables ayant des bords longitudinaux reliés à un fond et des bords longitudinaux opposés libres présentant des redans agencés pour coopérer avec les redans du bord longitudinal correspondant de l'autre aile à la manière des dents d'une fermeture à glissière. Des moyens de fermeture et d'ouverture de la courroie sont prévus respectivement sous la forme de galets disposés pour rapprocher les bords libres des ailes et d'un conduit central disposé pour écarter les bords libres des ailes. La réalisation de la courroie est relativement compliquée et l'installation est de structure complexe.

Le document DE-A-1 189 896 décrit une courroie pour le transport de rubans de carde, qui comprend des ailes déformables reliées par un fond. La déformation des ailes est obtenue en exerçant une pression sur celles-ci en direction du fond.

Le document DE-A-40 33 426 décrit une courroie de transport plate dont les bords longitudinaux peuvent être relevés par l'intermédiaire de galets.

Le document US-A-4 819 791 décrit une courroie de transport comportant deux ailes déformables ayant des bords longitudinaux reliés par un fond et des bords longitudinaux opposés libres qui peuvent être appliqués l'un contre l'autre par l'intermédiaire de câbles supportant les ailes de la courroie.

Il est en outre connu du document US-A-2 340 744 une chaîne de transport à maillons articulés dont l'ouverture et la fermeture sont commandées par des glissières. Une telle chaîne a une structure complexe présentant des risques de fuites au niveau des articulations lors du transport de matériaux humides.

Il existe donc un besoin non résolu de manière commode à ce jour d'une machine de mise en boîte comportant un convoyeur de conformation ayant une structure simple facilitant les opérations de maintenance et dont le montage dans la machine de mise en boîte est aisé.

A cet effet, on prévoit, selon l'invention, une machine de mise en boîte de matière molle, comprenant un convoyeur de conformation de la matière molle en un boudin, un organe support servant à amener successivement des boîtes à remplir dans le prolongement du convoyeur, et un organe de coupe du boudin associé à l'organe support, le convoyeur de conformation comprenant une courroie unique formant une boucle fermée passant autour de deux poulies d'extrémité d'axes parallèles, la courroie comportant deux ailes longitudinales en regard et à distance l'une de l'autre et une semelle ayant deux bords longitudinaux auxquels les ailes sont reliées par des parties de liaison qui sont déformables entre un premier état dans lequel la courroie est ouverte supérieurement, les bords libres des ailes longitudinales étant alors écartés l'un de l'autre de manière à former une cavité ouverte, et un deuxième état dans lequel la courroie est refermée sur elle-même, les deux ailes longitudinales étant alors appliquées l'une contre l'autre par leurs bords libres de manière à délimiter une cavité fermée, la machine comportant en outre des glissières latérales s'étendant parallèlement à la courroie pour coopérer avec les ailes de manière à déformer les parties de liaison de ladite courroie entre leur premier et deuxième états, de sorte que la matière molle disposée dans la courroie dans son premier état est progressivement conformée par la courroie qui est amenée dans son deuxième état par lesdites glissières latérales.

Ainsi, la courroie peut délimiter à elle seule une cavité ouverte permettant les opérations de chargement et de déchargement de la matière et une cavité fermée permettant l'opération de conformation de cette matière. En outre, l'étanchéité des cavités est parfaitement assurée par la semelle qui constitue le fond de celles-ci. La structure d'un convoyeur utilisant cette courroie est alors particulièrement simple. Par ailleurs, les glissières assurent la fermeture sur elle-même de la courroie par une action positive qui permet une conformation de la matière molle particulièrement efficace.

De plus, la courroie ainsi agencée peut être ouverte plus largement que si elle ne comportait qu'une partie de liaison au niveau de la semelle par exemple, ce qui facilite son chargement. Enfin, la déformation des parties de liaison reliant les ailes à la semelle est plus facile à réaliser qu'une déformation d'une partie de liaison unique qui serait située au niveau de la semelle.

De préférence, chaque partie de liaison comprend un ligament charnière. Un tel ligament garantit la précision de la déformation de la courroie, et assure la souplesse et l'endurance requises.

Selon une caractéristique particulière, les ailes longitudinales ont une face interne conformée de manière qu'elles délimitent une cavité fermée de section transversale sensiblement circulaire lorsque la courroie est dans son deuxième état.

Selon un mode de réalisation particulier, la semelle comprend une portion d'appui plus rigide que les parties de liaison, ladite portion d'appui étant crantée sur sa face extérieure venant au contact des poulies d'extrémité. Ainsi, la portion d'appui ne se déforme pas lorsque les parties de liaison sont sollicitées, ce qui favorise la déformation de ces parties de liaison, et de plus elle est à même d'assurer de façon optimale ses fonctions de support et d'entraînement.

De préférence alors, la portion d'appui est en un matériau différent du reste de la courroie.

Avantageusement, la courroie est réalisée en au moins un matériau à base d'élastomère. Ce matériau sera de préférence choisi pour que les parties de liaison assurent en plus une fonction de rappel élastique tendant à ramener ladite courroie dans son premier état de repos où elle est refermée sur elle-même. Ainsi, lorsque la courroie n'est plus dans les glissières, elle tend à s'ouvrir, ce qui permet d'évacuer plus facilement les résidus solides et liquides qui pourraient demeurer sur la courroie après déchargement de la matière molle. Le nettoyage de la courroie est de la sorte relativement aisé.

Selon une caractéristique particulière, une gouttière de guidage de la matière s'étend dans le prolongement de la courroie entre la courroie et l'organe support.

Avantageusement, les ailes comprennent une surface externe d'appui sur les glissières latérales, cette surface externe d'appui étant essentiellement plane et directement adjacente aux parties de liaison et, de préférence, une languette de sollicitation s'étend en saillie le long de chaque aile pour être reçue dans une rainure correspondante ménagée le long de chaque glissière latérale.

Ces dispositions particulières permettent d'assurer une coopération maximale entre les glissières et la courroie en vue d'obtenir la conformation la plus efficace possible.

D'autres caractéristiques et avantages de l'invention ressortiront à la lecture de la description qui suit d'un mode de réalisation particulier non limitatif de l'invention. Il sera fait référence aux dessins annexés, parmi lesquels :
- la figure 1 est une vue schématique d'une machine de mise en boîte conforme à l'invention,
- la figure 2 est une vue partielle de la machine selon l'invention, en coupe selon la ligne II-II de la figure 1, dans la zone de chargement de la machine,
- la figure 3 est une vue partielle de la machine selon l'invention en coupe transversale selon la ligne III-III de la figure 1 dans la zone de resserrement de la courroie,
- la figure 4 est une vue partielle de la machine selon l'invention en coupe transversale selon la ligne IV-IV de la figure 1, dans la zone de conformation finale de la matière molle.

La machine de mise en boîte décrite ci-après est destinée plus particulièrement à la mise en boîtes de conserve de thon cru. Bien entendu, la machine pourra être utilisée pour tout autre type de chair alimentaire ou matières analogues.

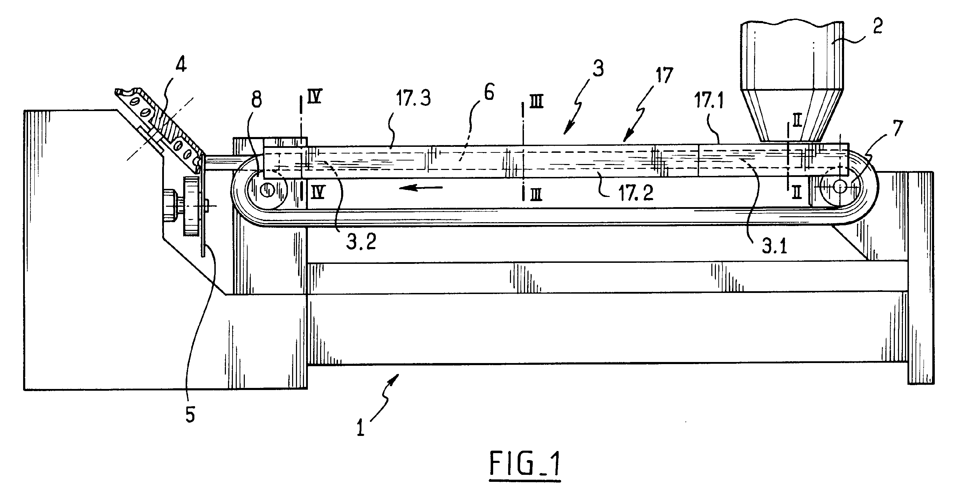

En référence à la figure 1, la machine de mise en boîte conforme à l'invention comprend, de façon connue en soi, un bâti 1, un système 2 d'alimentation en chair d'un convoyeur généralement désigné en 3 conçu pour la conformation de la chair en un boudin continu. Le convoyeur 3 a une portion amont 3.1 (par référence au sens d'avancement, marqué d'une flèche, de la chair de thon) s'étendant à l'aplomb du système d'alimentation 2 et une portion aval 3.2 à proximité de laquelle est monté tournant sur le bâti 1 un barillet 4 de présentation de boîtes à remplir dans le prolongement de la partie aval 3.2 du convoyeur 3, un organe tournant de coupe 5 entraîné par un moteur associé (en synchronisation avec l'avancement pas à pas du convoyeur) étant associé au barillet 4 pour découper le boudin en tronçons de longueur égale à la profondeur des boîtes.

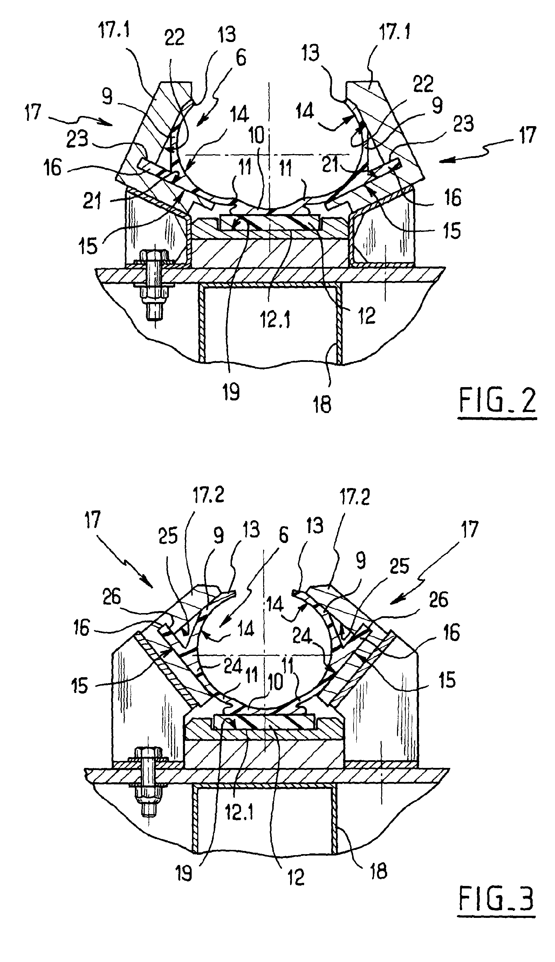

Conformément à l'invention, et en référence également aux figures 2 à 4, le convoyeur 3 comprend une courroie 6 formant une boucle fermée passant autour de poulies d'extrémité amont et aval 7, 8 montées chacune pour tourner sur le bâti 1 autour d'un axe respectif sensiblement horizontal. La poulie aval 8 est ici la poulie motrice et elle est associée à un moteur d'avance pas à pas de la courroie 6. Le pas d'avance est égal à la longueur du tronçon du boudin de chair qui doit être mis en boîte.

La courroie 6 comprend deux ailes longitudinales 9 s'étendant en regard et à distance l'une de l'autre et une semelle 10 ayant deux bords longitudinaux opposés auxquels les ailes 9 sont reliées par des parties de liaison 11 formées chacune par un ligament déformable. Les ailes longitudinales 9 comportent une surface interne 14 qui est ici sensiblement de forme semi-cylindrique concave. Chaque aile 9 comporte à proximité de la partie de liaison 11 une surface externe d'appui 15 sensiblement plane et une languette de sollicitation 16 s'étendant en saillie de l'aile 9 dans le prolongement de la surface externe d'appui 15 d'un côté de celle-ci opposé à la partie de liaison 11. Les fonctions de la surface externe d'appui 15 et de la languette de sollicitation 16 seront explicitées plus loin.

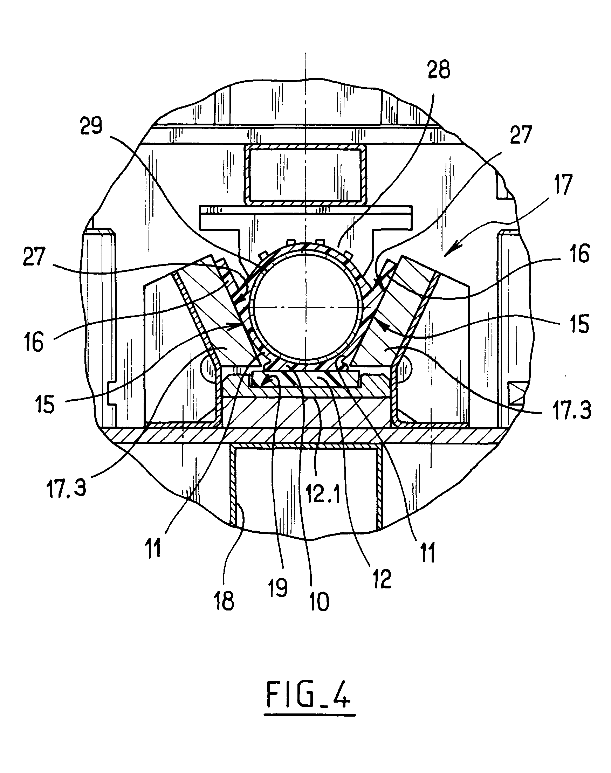

Les parties de liaison 11 sont déformables entre un premier état de déformation dans lequel la courroie est ouverte supérieurement, les bords libres notés 13 des ailes longitudinales 9 étant alors écartés l'un de l'autre de manière à former une cavité ouverte (voir la figure 2) et un deuxième état dans lequel la courroie est refermée sur elle-même, les bords libres 13 des ailes longitudinales 9 étant alors en appui l'un contre l'autre de sorte que les ailes 9 délimitent une cavité fermée de section transversale circulaire (voir la figure 4).

La semelle de liaison 10 comprend ici une portion d'appui 12 par laquelle la courroie 6 est en contact avec les poulies 7 et 8.

La portion d'appui 12 est réalisée en un matériau plus rigide que les parties de liaison 11 ou dans le même matériau que celles-ci, le matériau ayant alors été durci localement et incluant des fibres longitudinales de renforcement. La portion d'appui 12 est alors crantée sur sa surface extérieure notée 12.1 venant au contact des poulies d'extrémité 7 et 8, de manière à faciliter l'enroulement de la courroie autour desdites poulies. La portion d'appui 12 assure alors de façon optimale ses fonctions de support et d'entraînement.

La courroie est fabriquée par l'extrusion d'un ou de plusieurs matériaux élastomères dans la position représentée à la figure 4. La courroie 6 est ensuite fendue longitudinalement pour séparer les bords libres 13.

La machine de mise en boîte comprend en outre deux glissières généralement désignées en 17 s'étendant parallèlement à la courroie 6 de part et d'autre du brin supérieur de celle-ci.

Les glissières 17 sont fixées sur un profilé support 18 s'étendant sous le brin supérieur de la courroie 6 et présentant une surface supérieure 19 formant une surface de glissement pour la portion d'appui 12 de la semelle 10. La surface supérieure 19 est par exemple constituée par une surface d'une pièce en un matériau à faible coefficient de frottement qui est fixée sur le profilé support 18. Les glissières 17 sont également réalisées dans ce matériau ou dans un matériau similaire. Ce matériau est par exemple un métal tel que du bronze ou une matière plastique telle que du polytétrafluoréthylène.

Chaque glissière 17 est divisée en segments référencés 17.1, 17.2, 17.3 de la partie amont 3.1 vers la partie aval 3.2 du convoyeur 3.

Chaque segment 17.1 possède deux faces 21, 22 adjacentes formant sensiblement un angle de 90° entre elles. Une rainure 23 est ménagée dans la face 22 dans le prolongement de la face 21. Les segments 17.1 sont fixés sur le profilé support 18 de manière que leurs faces 21, 22 s'étendent en regard.

La courroie 6 est disposée entre les segments 17.1 de telle manière que les surfaces externes d'appui 15 soient en contact avec les faces 21, que les parties des ailes 9 adjacentes aux bords libres 13 soient en contact avec les faces 22, et que les languettes de sollicitation 16 soient reçues dans les rainures 23 et maintiennent la courroie 6 dans son premier état. La portion d'appui 12 est appliquée contre la surface 19, ce qui facilite la déformation des parties de liaison 11.

Chaque segment 17.2 possède deux faces 24, 25 adjacentes formant sensiblement un angle de 90° entre elles. Une rainure 26 est ménagée dans la face 25 dans le prolongement de la face 24 pour recevoir la languette de sollicitation 16. Comme les segments 17.1, les segments 17.2 sont fixés sur le profilé support 18 de manière que leurs faces 24, 25 s'étendent en regard

Les segments 17.2 sont légèrement vrillés sur eux-mêmes de manière que la portion de la courroie 6 reçue dans leur partie amont soit dans son premier état tandis que la portion de la courroie 6 reçue dans leur partie aval soit dans son deuxième état, les segments 17.2 refermant progressivement la courroie 6 sur elle-même.

On remarquera que la face 25 est appliquée contre la partie libre des ailes 9, ce qui permet d'éviter une déformation de cette partie des ailes du fait de la résistance de la matière molle lors de la conformation. La conformation est ainsi plus efficace.

Les segments 17.3 comportent une face 27 formant une surface de glissement pour la surface externe d'appui 15 des ailes 9. Les segments 17.3 sont fixés au profilé 18 dans une position dans laquelle ils maintiennent la courroie 6 dans son deuxième état.

Un patin 28 fixé au bâti 1 au-dessus de la partie aval des segments 17.3 est appliqué contre les bords libres 13 des ailes 9 pour maintenir la courroie 6 dans son deuxième état.

En fonctionnement, la courroie 6 est en rotation autour des poulies 7 et 8 de telle manière que le brin supérieur de la courroie 6 coulisse dans les glissières 17.

La partie du brin supérieur de la courroie 6 qui est reçue entre les segments 17.1 est dans son premier état de déformation, de sorte que cette partie de la courroie 6 peut recevoir la chair déposée directement par le système d'alimentation 2 (figure 2).

La partie du brin supérieur de la courroie 6 s'étendant entre la partie amont 3.1 et la partie aval 3.2 est reçue entre les segments 17.2 est dans un état intermédiaire de déformation tel que la courroie se resserre progressivement du premier vers le deuxième état (voir figure 3).

La chair transportée par la courroie 6 est ainsi progressivement conformée en un boudin cylindrique.

La partie aval 3.2 du brin supérieur de la courroie 6 reçue entre les segments 17.3 est dans son deuxième état assurant la conformation finale et complète du boudin (voir la figure 4).

En arrivant vers l'extrémité aval des segments 17.3, la courroie 6 est amenée dans son premier état par une gouttière 29 de guidage du boudin de chair (ici la gouttière est en forme de tube) qui s'étend dans le prolongement du brin supérieur de la courroie 6, entre la courroie 6 et le barillet 4, et écarte les bords libres 13 des ailes 9 de la courroie 6. Le boudin est alors libéré de la pression de conformation exercée par les segments 17.3 et le patin 28 agissant sur la courroie 6, et ce boudin est conduit par la gouttière 29 dans une boîte portée par le barillet 4.

Après qu'un tronçon du boudin a été inséré dans la boîte, l'organe de coupe 5 sépare ce tronçon du reste du boudin, et le barillet 4 tourne d'un pas angulaire pour présenter une nouvelle boîte à remplir.

Le matériau élastomère constitutif de la courroie sera de préférence choisi pour que les parties de liaison 11 assurent une fonction de rappel élastique (à la façon d'un ressort de torsion) tendant à ramener ladite courroie dans son premier état. Ainsi, le brin inférieur de la courroie 6 est ouvert et laisse s'échapper les résidus solides et liquides qui pourraient demeurer dans la courroie après déchargement du boudin de matière molle.

Bien entendu l'invention n'est pas limitée au mode de réalisation décrit et on peut y apporter des variantes de réalisation sans sortir du cadre de l'invention tel que défini par les revendications.

## Revendications

1. Machine de mise en boîte de matière molle, comprenant un convoyeur de conformation de la matière molle en un boudin, un organe support (4) servant à amener successivement des boîtes à remplir dans le prolongement du convoyeur, et un organe de coupe (5) du boudin associé à l'organe support, caractérisée en ce que le convoyeur de conformation (3) comprend une courroie (6) unique formant une boucle fermée passant autour de deux poulies d'extrémité (7, 8) d'axes parallèles, la courroie comportant deux ailes longitudinales (9) en regard et à distance l'une de l'autre et une semelle (10) ayant deux bords longitudinaux auxquels les ailes sont reliées par des parties de liaison (11) qui sont déformables entre un premier état dans lequel la courroie est ouverte supérieurement, les bords libres (13) des ailes longitudinales étant alors écartés l'un de l'autre de manière à former une cavité ouverte, et un deuxième état dans lequel la courroie est refermée sur elle-même, les deux ailes longitudinales étant alors appliquées l'une contre l'autre par leurs bords libres de manière à délimiter une cavité fermée, la machine comportant en outre des glissières latérales (17) s'étendant parallèlement à la courroie pour coopérer avec les ailes de manière à déformer les parties de liaison (11) de ladite courroie entre leur premier et deuxième états, de sorte que la matière molle disposée dans la courroie dans son premier état est progressivement conformée par la courroie qui est amenée dans son deuxième état par lesdites glissières latérales.

2. Machine selon la revendication 1, caractérisée en ce que chaque partie de liaison (11) comprend un ligament charnière.

3. Machine selon la revendication 1 ou la revendication 2, caractérisée en ce que les ailes (9) ont une face interne (14) conformée de manière que les ailes (9) délimitent une cavité fermée de section transversale sensiblement circulaire lorsque la courroie (6) est dans son deuxième état.

4. Machine selon l'une des revendications précédentes, caractérisée en ce que la semelle (10) comprend une portion d'appui (12) plus rigide que les parties de liaison (11), ladite portion d'appui étant crantée sur sa surface extérieure (12.1) venant au contact des poulies d'extrémité.

5. Machine selon la revendication 4, caractérisée en ce que la portion d'appui (12) est en un matériau différent du reste de la courroie (6).

6. Machine selon l'une des revendications précédentes, caractérisée en ce que la courroie (6) est réalisée en au moins un matériau à base d'élastomère.

7. Machine selon la revendication 6, caractérisée en ce que le matériau constitutif est choisi pour que les parties de liaison (11) assurent en plus une fonction de rappel élastique tendant à ramener ladite courroie (6) dans son premier état.

8. Machine selon l'une quelconque des revendications précédentes, caractérisée en ce qu'une gouttière (29) de guidage de la matière s'étend dans le prolongement de la courroie (6) entre la courroie et l'organe support (4).

9. Machine selon l'une quelconque des revendications précédentes, caractérisée en ce que les ailes (9) comprennent une surface externe d'appui (15) sur les glissières latérales (17), cette surface externe d'appui étant essentiellement plane et directement adjacente aux parties de liaison (11).

10. Machine selon l'une quelconque des revendications précédentes, caractérisée en ce qu'une languette de sollicitation (16) s'étend en saillie le long de chaque aile (9) pour être reçue dans une rainure (23, 26) correspondante ménagée le long de chaque glissière latérale.
